# EUROPEAN PATENT APPLICATION

(11) **EP 1 669 284 A2**
(43) Date of publication of application: **14.06.2006**
(21) Application number: 05026276.5
(22) Date of filing: 01.12.2005
(51) Int. Cl.: B62M 3/00

(54) **Bicycle crankset**

(30) Priority: 09.12.2004 JP 2004356682
(71) Applicant: SHIMANO INC., Sakai-shi, Osaka 590-8577 (JP)
(72) Inventor: Tetsuka, Toshio, Osaka 591-8021 (JP); Inoue, Hideya, Osaka 591-8021 (JP)
(74) Representative: Grosse, Wolfgang

(57) **Abstract**

A crankset (24) is provided that is mounted on a crank spindle (25) rotatably mounted in a hanger component (20) of a bicycle and that meshes with a chain (22). The crankset (24) includes a plurality of sprockets (35, 36 37), a crank component (38), and a chain guard (39, 139, 239). The plurality of sprockets are lined up in the axial direction so that the number of teeth increases outward in the axial direction. The crank component (38) has a plurality of arm portions (40) extending radially for fixing the plurality of sprockets. The chain guard (39, 139, 239) is provided substantially in ring form on the inner side, the side disposed toward the hanger component (20), of the small-diameter sprocket (37) with the fewest teeth of the plurality of sprockets such that the gap (L1, L2) between the hanger component (20) and the inner side is smaller than the size of the chain (22).

## Description

### CROSS-REFERENCE TO RELATED APPLICATIONS

This application claims priority to Japanese Patent Application No. 2004-356682. The entire disclosure of Japanese Patent Application No. 2004-356682 is hereby incorporated herein by reference.

### BACKGROUND OF THE INVENTION

### Field of the Invention

The present invention generally relates to a bicycle crankset having sprockets configured to mesh with a bicycle drive chain. More specifically, the present invention relates to a bicycle crankset with a chain guard disposed on the smallest sprocket to prevent jamming of the chain if the chain comes off of the small sprocket to the inside. The crankset is mounted on a crank spindle, which is rotatably supported by a hanger component of a bicycle.

### Background Information

A bicycle crankset is usually mounted on a crank spindle that is rotatably supported in a tubular hanger at the bottom of the bicycle frame. With a crankset of this type, there is a known configuration comprising a plurality of sprockets that are paired with a front derailleur. See Japanese Laid-Open Patent Application 2004-90824, for example. A conventional crankset has a plurality of sprockets lined up in the crank spindle (axial) direction such that the number of teeth increases on each subsequent outward sprocket in the axial direction. A crank arm having a spider arm component that extends radially outwardly is provided for fixing the plurality of sprockets. Because the number of teeth on the plurality of sprockets usually increases on each subsequent outward sprocket in the axial direction, the small-diameter sprocket with the fewest number of teeth is located closest to the hanger (hereinafter referred to as the inner side).

With a bicycle having a crankset such as described above, the front shift control device and the front derailleur are linked by a shift cable. The front derailleur is operated by the shift cable upon actuation of the front shift control device such that the chain is guided or shifted onto the desired front sprocket of the plurality of front sprockets. While these conventional front cranksets generally function well. They do suffer from some deficiencies.

In particular, with the above-mentioned conventional crankset, when the chain is guided or shifted from a larger-diameter sprocket to the smallest-diameter sprocket on the inner side of the larger sprocket, the chain sometimes goes over (i.e. is pushed laterally beyond or continues to move laterally beyond) the smallest-diameter sprocket and drops in between the hanger and the smallest sprocket. The larger sprocket is located relatively farther from the hanger (hereinafter referred to as the outer side or outwardly) than the smallest sprocket. When the chain drops in between the smallest-diameter sprocket and the hanger, it can become lodged in the gap between the hanger and the sprocket. When this happens, the chain can snag on the heads of the bolts attaching the sprocket to the spider arm, or snag on the hanger or on the bottom bracket threaded therein, for example. If the chain snags, the crankset may be prevented from turning or rotating, and thus, this condition may render the bicycle unridable.

In view of the above, it will be apparent to those skilled in the art from this disclosure that there exists a need for an improved bicycle crankset. This invention addresses this need in the art as well as other needs, which will become apparent to those skilled in the art from this disclosure.

### SUMMARY OF THE INVENTION

One object of the present invention is to provide a bicycle crankset which prevents the chain from becoming lodged in the gap between the sprocket and the hanger of the frame or the bottom bracket mounted in the hanger in the event that the chain falls off the sprocket during riding.

Another object of the present invention is to provide a bicycle crankset that includes a plurality of sprockets, which prevents the chain from becoming lodged in the gap between the smallest sprocket and the hanger of the frame or the bottom bracket mounted in the hanger in the event that the chain is moved inwardly off of or continues to move inwardly off of the smallest sprocket during shifting from a larger sprocket.

Another object of the present invention is to provide a bicycle crankset that is strong, yet relatively lightweight.

Yet another object of the present invention is to provide a bicycle crankset that is relatively simple and inexpensive to manufacture and assemble.

The foregoing objects can basically be attained by providing a bicycle crankset that includes a crank component, an innermost sprocket, at least one outer sprocket and a chain guard. The crank component is configured to be coupled to a crank spindle rotatably mounted in a hanger component of a bicycle to rotate about a rotation axis. The crank component includes a plurality of arm portions extending radially outwardly therefrom. The innermost sprocket has a predetermined number of inner sprocket teeth. The innermost sprocket is fixedly attached to the arm portions of the crank component. The outer sprocket has a predetermined number of outer teeth larger than the predetermined number of inner teeth. The outer sprocket is fixedly attached to the arm portions of the crank component to be located axially further from the hanger component than the innermost sprocket. The chain guard is substantially ring-shaped and is disposed on an axially inner side of the innermost sprocket toward the hanger component such that a gap between the hanger component and the chain guard is smaller than a transverse dimension of the chain.

In other words, a crankset that is mounted on a crank spindle rotatably mounted on a hanger component of a bicycle and that meshes with a chain, includes a plurality of sprockets, a crank component, and a chain guard. The plurality of sprockets are lined up in the axial direction so that the number of teeth increases outward in the axial direction. The crank component has a plurality of arm components extending radially for fixing the plurality of sprockets. The chain guard is provided substantially in ring form on the inner side (the side disposed toward the hanger component) of the small-diameter sprocket with the fewest teeth of the plurality of sprockets such that the gap between the hanger component and the inner side is smaller than the size of the chain.

When this crankset is provided to the crank spindle that is rotatably mounted in the hanger component, the chain guard provided in ring form makes the gap between the hanger component and the inner side of the small-diameter sprocket effectively smaller than the width or height, for example, of the chain that meshes with the sprocket. The result of making the gap smaller is that even if the chain should come off the small-diameter sprocket to the inside in the axial direction when the derailleur guides the chain from a large-diameter sprocket to the small-diameter sprocket during shifting, since the gap is smaller than the size of the chain, the chain does not lodge in the gap. Since the chain guard is provided to the inner side of the small-diameter sprocket, and the gap between the hanger component and the small-diameter sprocket is smaller than the size of the chain, the chain will not lodge in the gap even if the chain falls off to the inside of the small-diameter sprocket.

In a bicycle crankset in accordance with a second aspect of the present invention, the innermost sprocket includes a ring-shaped gear component with the inner sprocket teeth arranged around an outer periphery thereof and a plurality of attachment elements protruding radially inwardly from an inner periphery of the gear component that are fixedly attached to the plurality of arm portions. In other words, the small-diameter sprocket has a ring-shaped gear component around the outer periphery of which are formed sprocket teeth, and a plurality of attachment components that protrude radially inward from the inner peripheral part of the gear component and are fixed to the plurality of arm components. In this case, the small-diameter sprocket is made more lightweight because the attachment components protrude inward from the gear component.

In a bicycle crankset in accordance with a third aspect of the present invention, the chain guard includes a ring component disposed on the axially inner side of the innermost sprocket such that the gap is formed between the hanger component and the ring component, and a mounting portion that is removably attached to the innermost sprocket. In other words, the chain guard has a ring component disposed on the inner side of the small-diameter sprocket so as to form the gap between the hanger component and this inner side, and a mounting component that is provided to the ring component and is removably mounted on the small-diameter sprocket. In this case, the entire gap is in the form of a ring because the chain guard has the ring component. Accordingly, the chain is less likely to snag or become lodged in the gap. Also, since the chain guard is separate from the small-diameter sprocket, it can be retrofitted to an existing small-diameter sprocket.

In a bicycle crankset in accordance with a fourth aspect of the present invention, the mounting portion includes a plurality of latching protrusions that extend axially outwardly from the inner side of the gear component of the innermost sprocket toward an outer side of the gear component of the innermost sprocket, and the latching protrusions are elastically coupled to the outer side. In other words, the mounting component has latching protrusions that extend from the inner side of the gear component toward the outer side (the opposite side from the inner side) and are elastically latched to the outer side. In this case, since the chain guard is elastically latched from the inner side of the gear component of the small-diameter sprocket, there is no need for bolts or other such fixing means, which simplifies the mounting of the chain guard.

In a bicycle crankset in accordance with a fifth aspect of the present invention, the latching protrusions are circumferentially arranged such that at least one of the latching protrusions is located adjacent a corresponding one of the attachment elements. In other words, the latching protrusions are elastically latched to the outer side near the plurality of attachment components. In this case, the latching protrusions are normally latched to the outer side near the plurality of attachment components, so it is easy to hide the latching protrusions behind the crank arm, and the latching protrusions will not mar the appearance of the crankset even if disposed on the outer side.

In a bicycle crankset in accordance with a sixth aspect of the present invention, the chain guard includes a ring component that is integrally formed with the attachment elements of the innermost sprocket, the ring component protruding toward the hanger component from the innermost sprocket. In other words, the small-diameter sprocket has a ring-shaped gear component around the outer periphery of which are formed sprocket teeth, and a plurality of attachment components that protrude radially from the inner peripheral part of the gear component and are fixed to the plurality of arm components, and the chain guard has a ring component that is formed integrally with the attachment components and protrudes toward the hanger component. In this case, since the chain guard is formed integrally with the attachment components of the small-diameter sprocket, the gap can be narrowed merely by fixing the small-diameter sprocket to the arm components. Accordingly, the chain can be prevented from lodging in the gap without having to mount the chain guard separately.

In a bicycle crankset in accordance with a seventh aspect of the present invention, the ring component protrudes axially toward the hanger component in areas located circumferentially between the attachment elements. In other words, the ring component protrudes toward the hanger component in between the attachment components. In this case, the weight of the crankset can be minimized even though the chain guard is constructed of metal rather than the relatively lighter weight synthetic resin material.

In a bicycle crankset in accordance with an eighth aspect of the present invention, the ring component includes a plurality of arc-shaped sections protruding axially toward the hanger component that are aligned in the circumferential direction and circumferentially spaced by apart from each other by a distance less than the pitch of the chain. In other words, the ring component has a plurality of arc components lined up in the circumferential direction and spaced apart at a pitch less than that of the chain. In this case, since the ring component is made up of a plurality of arc components spaced apart at a pitch less than that of the chain, the chain can be prevented from becoming lodged, and the chain guard can be made more lightweight.

In a bicycle crankset in accordance with a ninth aspect of the present invention, the ring component includes a plurality of notched sections where a peripheral edge of the ring component is recessed in a direction away from the hanger component, and the circumferential length of each notched section is smaller than the pitch of the chain. In other words, the ring component has notched components where part of the peripheral edge is notched, which are spaced apart at a pitch less than that of the chain. In this case, the provision of notches at part of the peripheral edge of the ring component reduces the overall weight.

In a bicycle crankset in accordance with a tenth aspect of the present invention, the ring component is disposed on the inner side of the attachment elements. In other words, the ring component is disposed on the inner side of the attachment components. In this case, since the ring component is disposed on the inner side of the attachment components, the chain is less likely to become lodged in the gap.

In a bicycle crankset in accordance with another aspect of the present invention, the crank component includes four arm portions and the innermost sprocket includes four attachment elements fixedly attached to the arm portions with four fasteners.

In a bicycle crankset in accordance with another aspect of the present invention, the mounting portion of the chain guard includes four latching protrusions with an adjacent pair of latching protrusions circumferentially arranged between an adjacent pair of arm portions.

In a bicycle crankset in accordance with another aspect of the present invention, the mounting portion of the chain guard includes four latching protrusions with a first pair of the latching protrusions circumferentially spaced less than about ninety degrees from each other and a second pair of the latching protrusions circumferentially spaced less than about ninety degrees from each other.

In a bicycle crankset in accordance with another aspect of the present invention, the first pair of latching protrusions are circumferentially spaced more than about ninety degrees from the second pair of latching protrusions.

In a bicycle crankset in accordance with another aspect of the present invention, the chain guard is constructed of a synthetic resin material.

In a bicycle crankset in accordance with another aspect of the present invention, the chain guard is constructed of a material with a lower coefficient of friction than the innermost sprocket.

In a bicycle crankset in accordance with another aspect of the present invention, the chain guard is constructed of a material with a lower weight than the innermost sprocket.

Basically, with the present invention, a chain guard is provided on the inner side of a small-diameter sprocket so that the (effective) gap between the hanger component and the inner side of the small-diameter sprocket is smaller than the width of the chain, so the chain is less likely to become lodged in the gap if it should fall off to the inside of the small-diameter sprocket.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side view of a bicycle equipped with a bicycle crank assembly in accordance with a first preferred embodiment of the present invention;
Figure 2 is a partial, transverse cross section of the crank assembly illustrated in Figure 1, with portions shown in full and other portions diagrammatically illustrated for the purpose of illustration;
Figure 3 is an outside elevational view of the crankset with a chain guard of the crank assembly illustrated in Figures 1 and 2 in accordance with the present invention;
Figure 4 is an inside elevational view (opposite side) of the crankset illustrated in Figure 3;
Figure 5 is an enlarged, outside elevational view of the small-diameter (innermost) sprocket and chain guard of the crankset illustrated in Figures 2-4;
Figure 6 is an enlarged, end elevational view of the small-diameter (innermost) sprocket and chain guard illustrated in Figure 5;
Figure 7 is a further enlarged, inside elevational view of the chain guard illustrated in Figure 6;

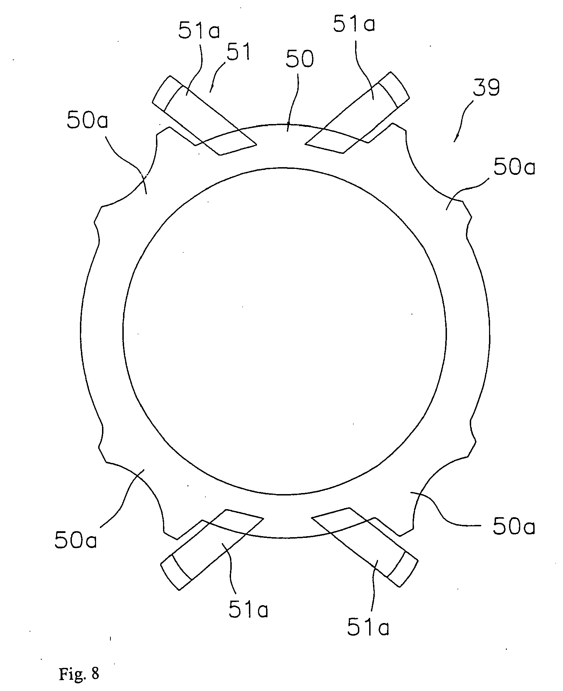

Figure 8 is an outside elevational view of the chain guard illustrated in Figure 7;

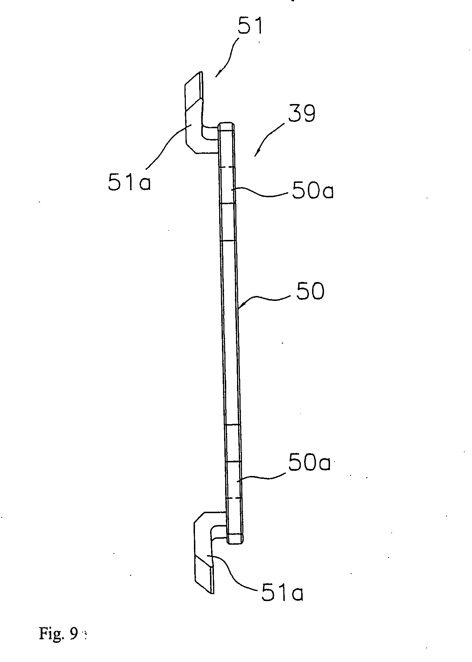

Figure 9 is an end elevational view of the chain guard illustrated in Figures 7 and 8;
Figure 10 is an inside elevational view of a chain guard in accordance with another preferred embodiment of the present invention, (i.e. corresponding to the view of Figure 7 of the previous embodiment);
Figure 11 is an outside elevational view of the chain guard illustrated in Figure 10 (i.e. corresponding to the view of Figure 8 of the previous embodiment);
Figure 12 is an end elevational view of the chain guard illustrated in Figures 10 and 11 (i.e. corresponding to the view of Figure 9 of the previous embodiment);
Figure 13 is an inside elevational view of a small-diameter (innermost) sprocket with an integral chain guard in accordance with yet another embodiment preferred embodiment of the present invention, (i.e. corresponding to the view of Figure 5 of the first embodiment); and
Figure 14 is an end elevational view of the sprocket and chain guard illustrated in Figure 13 (i.e. corresponding to the view of Figure 6 of the first embodiment).

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

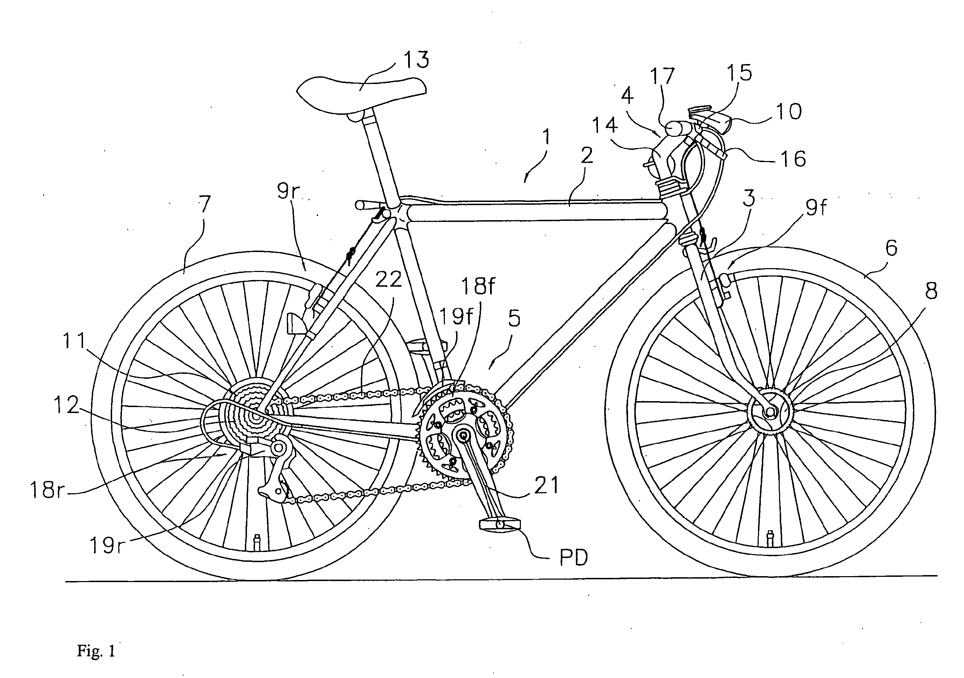

In Figure 1, a bicycle is illustrated having a bicycle crank assembly 21 in accordance with a first embodiment of the present invention. The bicycle illustrated herein is what is known as a mountain bike, capable of traveling over uneven terrain. The crank assembly 21 of the present invention is particularly suited to a mountain bike, which often experiences relatively severe riding and shifting conditions. However, it will be apparent to those skilled in the bicycle art from this disclosure that the present invention can be applied to other types of bicycles as needed and/or desired. The bicycle basically includes a frame 1, a handlebar assembly (component) 4, a drive train or drive assembly (component) 5, a front wheel 6 with a dynamo hub 8, a rear wheel 7, and front and rear brake devices 9f and 9r. The frame 1 includes a diamond-shaped frame body 2 and a front fork 3 pivotally coupled to the frame body 2. The handlebar assembly is attached to the front fork 3 to steer the front wheel 6, and thus, to steer the bicycle. A front light 10 equipped with a cycle computer and used for illuminating the path ahead of the bicycle is mounted to the handlebar assembly (component) 4. The hub dynamo 8 provides electrical power for the light, computer and/or any other electrical devices.

The frame body 2 of the frame 1 is constructed of welded pipe. Various components including a saddle 13 and the drive train 5 are attached to the frame body 2. The front fork 3 is mounted pivotably around an inclined axis at the front part of the frame body 2. The front wheel 6 is rotatably mounted to the front fork 3, while the rear wheel 7 is rotatably mounted to the rear triangle of the frame body 2.

The handlebar assembly 4 has a handlebar stem 14 fixedly attached to the upper part of the front fork 3, and a handlebar 15 fixedly attached to the handlebar stem 14. Brake operating devices, for operating the front and rear brake devices 9f and 9r, and grips 17 are installed at opposite ends of the handlebar 15. Each brake operating device includes a brake lever 16. External shift operating devices (not shown) are provided either integrally with or separately from the left and right brake operating devices. Shift levers (not shown) are preferably provided on the shift operating devices in a conventional manner.

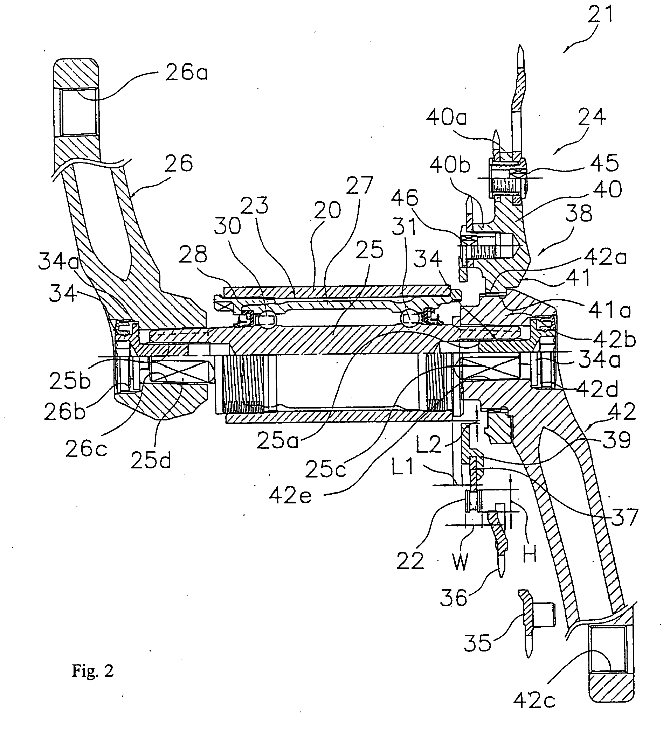

The drive train 5 basically includes the crank assembly 21, a chain 22, a rear cassette or sprocket assembly 11, the front and rear derailleurs 19f and 19r, and the front and rear shift operating devices (not shown). The crank assembly is rotatably mounted to a hanger component 20 (Figure 2) located at the lower part of the frame body 2. The chain 22 looped around the crank assembly 21 and the rear cassette 11 so that the rider's pedaling propels the bicycle using a variety of different gear ratios. The front and rear shift control devices (not shown) are conventional and operatively coupled to the front and rear derailleurs 19f and 19r, respectively, in a conventional manner to selectively move the chain 22 laterally over the crank assembly 21 and the rear cassette 11, respectively. Thus, the front and rear derailleurs 19f and 19r are mounted in the middle and rear parts of the frame 1, respectively. The front derailleur 19f guides the chain 22 onto one of three sprockets and is used to shift the chain 22 laterally between the three sprockets (discussed below) of a crankset 24 in accordance with the present invention. The rear cassette or sprocket assembly 11 also includes a plurality of different sized (different numbers of teeth) sprockets 12, for example eight rear sprockets. The rear cassette 11 is coupled to splined member of the rear hub of the rear wheel 7 with a one-way clutch mounted between the splined member and the hub shell in a conventional manner to selectively propel the bicycle. The rear derailleur 19r guides the chain 22 onto one of sprockets 12 and is used to shift the chain 22 laterally between the sprockets 12 in a conventional manner.

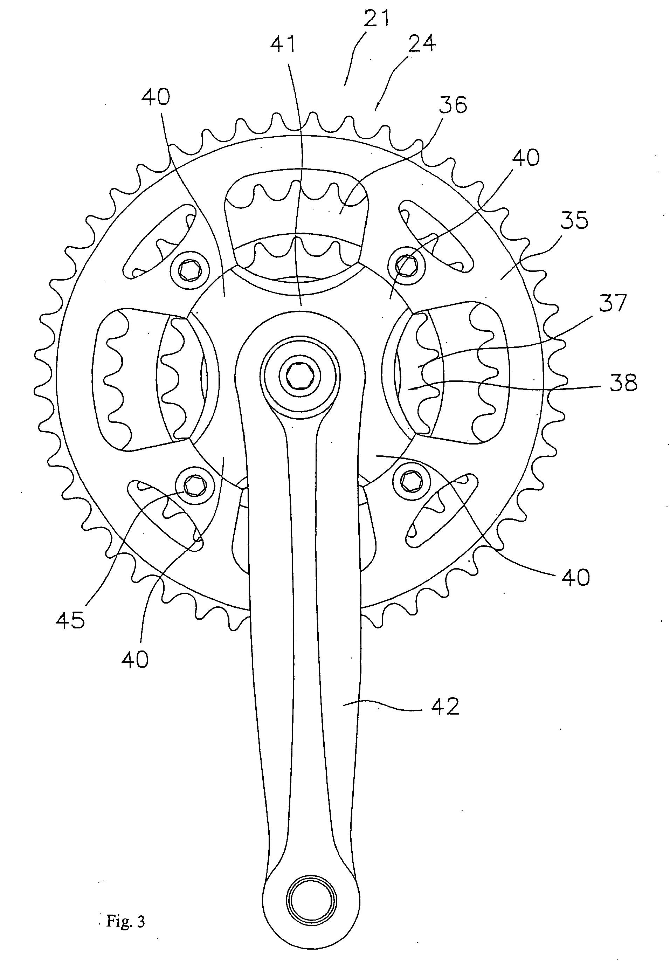

As shown in Figure 2, the crank assembly 21 basically includes a bottom bracket 23 equipped with a crank spindle 25, the crankset 24, and a left crank arm 26. The crankset 24 is removably fixed attached to the right end of the crank spindle 25. The left crank arm 26 (Figure 3) is removably fixed attached to the left end of the crank spindle 25.

The bottom bracket 23 basically includes the crank spindle 25, a bearing unit 27 and a fixing member 28. The bearing unit 27 is threaded into the right end of the lower hanger component 20. The fixing member 28 is threaded into the left end of the lower hanger component 20. The crank spindle 25 is freely rotatably supported within the lower hanger component 20 by the bearing unit 27 to rotate about a rotation axis X. The bearing unit 27 includes a pair of bearings 30 and 31 that are disposed apart from each other (i.e. in an axially spaced arrangement). The fixing member 28 engages the left end of the bearing unit 27 to support the internal end of the bearing unit 27 (fixes the bearing unit 27 to the hanger component 20). Thus, the bearing unit 27 and the fixing member 28 are fixedly attached to the hanger component 20.

The crank spindle 25 is rotatably mounted to the hanger component 20 by the bearings 30 and 31 of the bottom bracket 23 mounted to the hanger component 20. The crank spindle 25 is an alloy shaft member having high rigidity, such as chrome-moly steel. Blind bores with female threads 25a and 25b are formed at both ends of the crank spindle 25. Fixing bolts 34 are threaded into the female threads 25a and 25b in order to fixedly attach the crankset 24 and the left crank arm 26 to the crank spindle 25. A pair of four-sided tapered projecting sections 25c and 25d are formed about the external surface of the ends of the crank spindle 25 (formed around the outer peripheral surface at both ends of the crank spindle 25) for non-rotatably mounting (receiving thereon) the crankset 24 and the left crank arm 26 thereto, respectively.

As shown in Figures 2 to 4, the crankset 24 in accordance with the present invention basically includes three (for example) sprockets 35-37, a main crank component 38 and a chain guard 39. The sprockets 35-37 are lined up in consecutive order in the axial direction so that the number of teeth on increases outward in the axial direction (i.e. each subsequent outwardly located sprocket has a larger diameter and more circumferentially spaced chain engagement teeth). The main crank component 38 has four arm portions 40 extending radially for fixing the three sprockets 35-37 thereto. The chain guard 39 is removably attached on the inner side 37e (the side disposed toward the hanger component 20) of the smallest sprocket 37 (with the fewest teeth) and disposed inward in the axial direction.

The sprocket 35 is a large-diameter sprocket with, about forty-two teeth (42T for example), and is disposed the farthest outward in the axial direction. The sprocket 36 is a medium-diameter sprocket with about thirty-six teeth (36T for example), and is disposed at an intermediate position in the axial direction. The sprocket 35 and sprocket 36 are fixedly attached on the outer and inner sides of the four arm portions 40 by four attachment fasteners (bolts/nuts) 45. In particular, each arm portion 40 has first sprocket fixing section 40a formed at the distal end thereof for attaching the sprockets 35 and 36 thereto via one of the fasteners (bolts/nuts) 45. Each of the sprockets 35-37 is preferably constructed of a lightweight, rigid material such as a metallic material (e.g. aluminum alloy, titanium or the like) as a one-piece, unitary member.

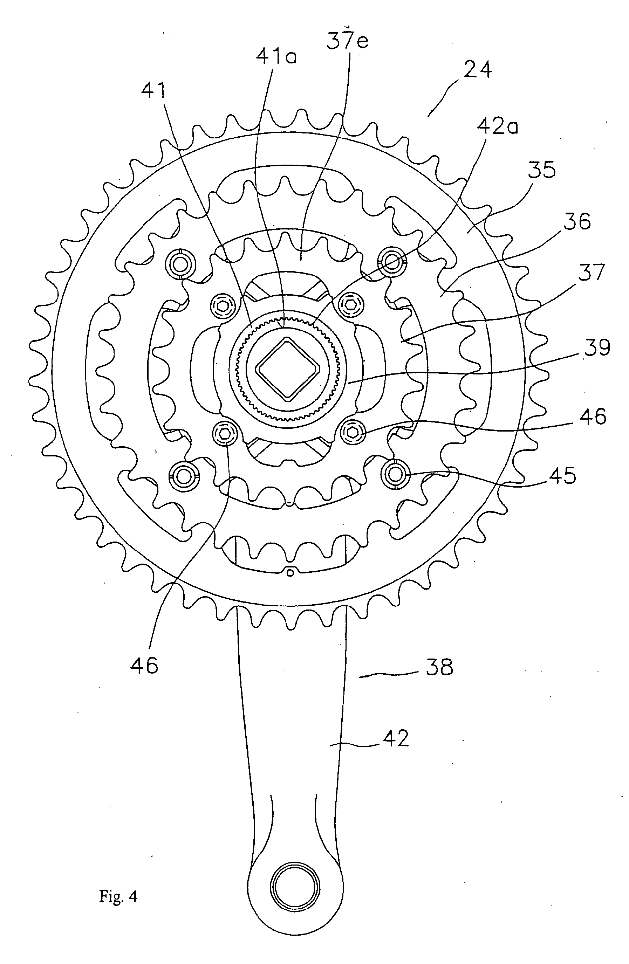

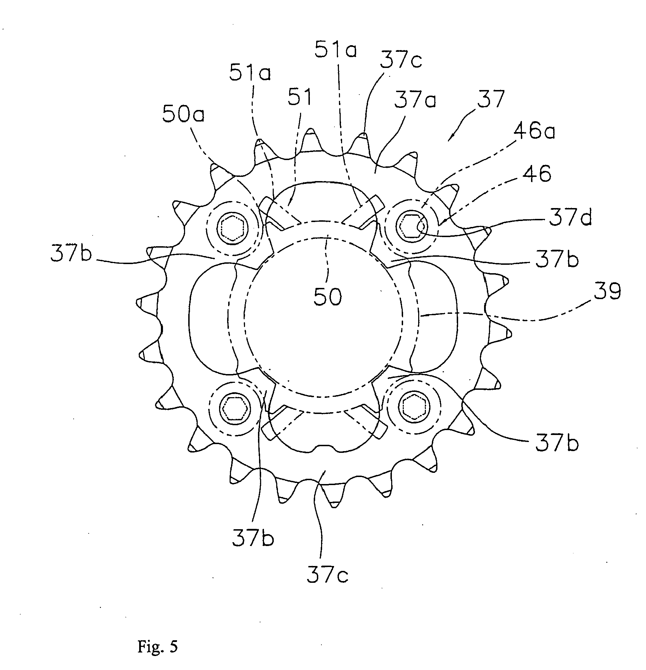

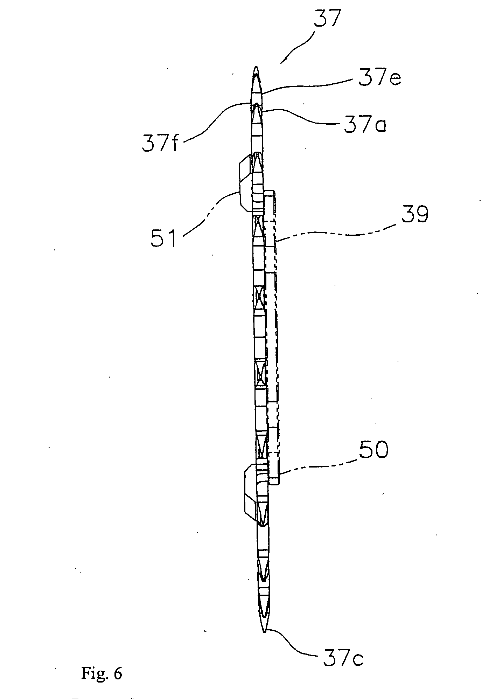

The sprocket (an example of a small-diameter sprocket) 37 is a small-diameter sprocket with about twenty-two teeth (22T for example), and is disposed the farthest inward in the axial direction. Thus, the sprocket 37 is an innermost sprocket with the smallest predetermined number of inner sprocket teeth (smallest diameter), while the sprockets 36 and 37 are outer sprockets with larger predetermined numbers of outer sprocket teeth (larger diameters) than the innermost sprocket 37. The sprocket 37 is fixed attached to the inner side of the four arm portions 40 by four attachment bolts 46. In particular, each arm portion 40 has a second sprocket fixing section 40b formed in the middle area of the inner side of the arm portion 40. As shown in Figures 5 and 6, the sprocket 37 has a ring-shaped gear component 37a and four attachment elements 37b protruding inward in the radial direction from the inner periphery (side) of the gear component 37a. The four attachment elements 37b are fixed attached to the second sprocket fixing sections 40b of the arm portions 40. As mentioned above, in the illustrated embodiment, twenty-two (for example) sprocket teeth 37c are formed around the outer periphery of the gear component 37a. The attachment elements 37b protrude toward the center rotation axis from the inner peripheral part of the gear component 37a, curving in a tapering shape, as best seen in Figures 4 and 5. Each of the attachment elements 37b has a centrally located through-hole 37d through which the attachment bolts 46 can be passed. The distal ends of the attachment elements 37b extend past the through-holes 37d toward the inner periphery of the chain guard 39. Of course, it will be apparent to those skilled in the bicycle art from this disclosure that the sprockets 35-37 could have different numbers of teeth as needed and/or desired without departing from the scope of the present invention.

The main crank component 38 basically includes the four arm portions 40 having the above-mentioned first and second sprocket fixing sections 40a and 40b, a rotation support member 41 and a right crank arm (component) 42. The rotation support member 41 is formed integrally with the four arm portions 40 so as to link the four arm portions 40 together. The rotation support member 41 and the four arm portions 40 are preferably constructed of a lightweight, rigid material such as a metallic material (e.g. aluminum alloy, titanium, carbon fiber composite or the like) as a one-piece, unitary member. The rotation support member 41 is non-rotatably crimped to the right crank arm 42. In particular, serrations 41a are formed on the inner peripheral face of the rotation support member 41. The serrations 41 a of the rotation support member 41 are non-rotatably engaged with (latched to) the proximal end of the right crank arm 42. The right crank arm 42 is, for example, a forged piece with a hollow center. The right crank arm 42 is preferably constructed of a lightweight, rigid material such as a metallic material (e.g. aluminum alloy, titanium, carbon fiber composite or the like) as a one-piece, unitary member. The right crank arm 42 and has a cylindrical fixing portion (component) 42b at the proximal end of which are formed mating serrations 42a that mesh with the serrations 41 a of the rotation support member 41. The right crank arm 42 extends in the radial direction and curves slightly outward in the axial direction away from the fixing portion 42b so as not to interfere with (to miss) the sprocket 35 and the chain 22. A pedal mounting element 42c (Figure 2) is formed at the extending distal end of the right crank arm 42 to which a pedal PD is rotatably mounted. A recess 42d is formed in the fixing portion 42b for accommodating the head 34a of one of a pair of fixing bolts (hex socket cap bolts) 34. A tapered internal section 42e having four sides that engage with the tapered projecting section 25c of the crank spindle 25 is also formed in the fixing portion 42b. The right crank arm 42 is securely fixed to the crank spindle 25 by a wedge action produced by the engagement of the tapered sections 25c and 42e when the fixing bolt 34 is tightened.

The left crank arm 26 is substantially the same shape as the right crank arm 42 of the crankset 24, except for the portion where serrations are formed. In other words, the left crank arm 26 has fixing portion that is different from the fixing portion 42b of the right crank arm 42 (i.e. a slightly modified external shape without the mating serrations 42a of the fixing portion 42). Otherwise, the left crank arm is identical to the right crank arm 42. Thus, the descriptions and illustrations of the right crank arm 42 also apply to the left crank arm 26, except as explained and illustrated herein. The left crank arm 26 is mounted to the crank spindle 25 with a fixing bolt 34 in a manner identical to the right crank arm 42. However, the left crank arm 26 is mounted to the crank spindle 25 such that it extends in the radial direction shifted in phase by 180 degrees from the right crank arm 42. A pedal mounting element 26c is formed at the extending distal end of the left crank arm 26 to which an additional pedal (that is a mirror image of the pedal PD) is rotatably mounted. A recess 26b is formed at the proximal end of the left crank arm 26 for accommodating the head 34a of one of the fixing bolts 34. A tapered internal section 26c having four sides that engage with the tapered projecting section 25d of the crank spindle 25 is also formed at this proximal end of the left crank arm 26.

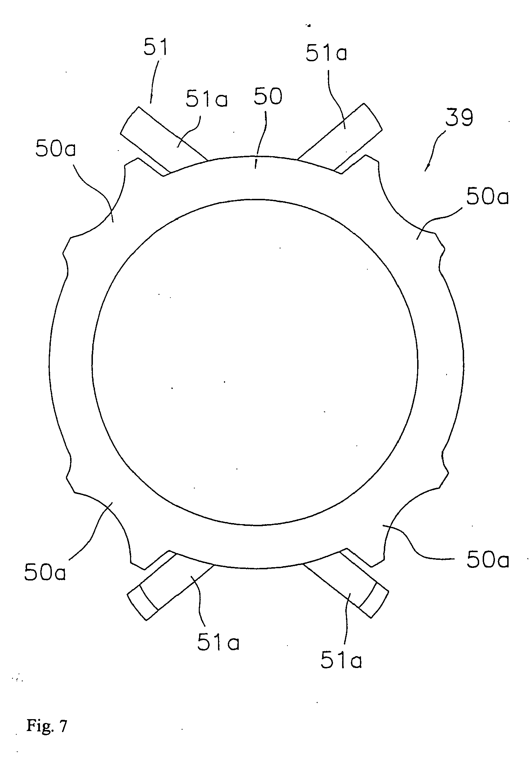

The chain guard 39 is constructed from a synthetic resin material that is relatively hard and slides well (i.e. has a relatively lower coefficient of friction than the metal sprocket 37), such as a polyacetal, polypropylene, or polyamide resin. The synthetic resin material of the chain guard 39 also preferably has a lower weight than the metal material of the sprocket 37 (i.e. per unit of volume). The chain guard 39 is provided in order to prevent the chain 22 from moving radially into the gap between the hanger component 20 and the sprocket 37. The chain guard 39 is provided in substantially ring form and protrudes toward the hanger component 20, such that the gap between the hanger component 20 and the sprocket 37 is smaller than the size of the chain 22. More specifically, the chain guard 39 is formed in substantially ring shape such that gap L1 and gap L2 in the axial and radial directions, respectively, between the hanger component 20 and the chain guard 39 are smaller than the width W and minimum height H of the chain 22, respectively. As shown in Figures 5 to 7, the chain guard 39 has a ring portion (component) 50 and a mounting portion (component) 51. The ring portion (component) 50 is disposed so as to form the gaps L1 and L2 between the hanger component 20 and the inner side 37e of the sprocket 37. The mounting portion (component) 51 is fixedly attached to (preferably integrally formed with) the ring portion (component) 50 in order to removably mount the chain guard 39 to the sprocket 37. In other words, the mounting portion 51 is provided in order to removably attach the chain guard 39 to the sprocket 37. The ring component 50 has a thickness (about 4 millimeters, for example) configured and arranged such that the gap L1 is less than the width W of the chain 22. As a result, the ring component 50 is somewhat thicker than the heads 46a of the attachment bolts 46. The outside periphery of the ring portion 50 is configured such that the heads 46a of the attachment bolts 46 can be accommodated. The inside periphery of the ring component is configured such that the gap L2 between the chain guard 39 and the hanger component 20 is less than the height H of the chain 22 (about 2 millimeters, for example). Also, bolt guards 50a that surround part of the periphery of the heads 46a of the attachment bolts 46 (about a quarter of the circumference of each head, for example) are formed on the ring component 50. The bolt guards 50a are provided in order to prevent the chain 22 from snagging on the heads 46a. However, even if these bolt guards 50a are not provided, the chain 22 will be unlikely to snag on the heads 46a if the thickness of the ring portion 50 is greater than the thickness of the heads 46a. Preferably, the ring portion 50 has a thickness greater than the thickness of the heads46a and/or is configured and arranged to project axially at least slightly beyond the free ends of the heads 46a.

The mounting portion 51 includes a plurality of (four) latching protrusions 51 a that extend from the inner side of the gear component 37a of the sprocket 37 toward the outer side 37f (the opposite side from the inner side 37e) of the sprocket 37 and then outwardly (inclined from the radial direction as viewed axially) to engage the outer side 37f. The latching protrusions 51a are curved in a hook shape, and are elastically latched to the outer side 37f of the sprocket 37. In particular, during installation, the distal ends of the latching protrusions 51a are bent slightly toward the outer side of the ring component 50. More specifically, when the chain guard 39 is mounted on the gear component 37a, the chain guard 39 is pushed axially from the inner side 37e toward the outer side 37f such that the latching protrusions deform and then hook onto the outer side 37f to provide a snug elastic latch to the gear component 37a. When the distal ends of the latching protrusions 51a are bent slightly toward the outer side of the ring component 50, the gap between the ring component 50 and the gear component 37a is widened, and then subsequently narrowed. In other words, two of the latching protrusions 51a can be latched onto the outer side 3 7f and the adjacent bolt guards 50a can be pushed laterally outwardly from the center to widen the gap between the ring component 50 and the gear component 37a on the opposite side. Then the opposed latching protrusions 51a (on the opposite side) can be pushed axially and deformed relatively easily to latch onto the outer side 37f of the sprocket 37. If the chain guard 39 is mounted to the sprocket 37 prior to the bolts 46 being attached in order to attach the sprocket 37 to the crank component 38, attachment of the chain guard 39 can be relatively easy.

With the above arrangement, because the chain guard 39 is provided on the inner side 37e of the small-diameter sprocket 37, and the gaps L1 and L2 between the hanger component 20 and the inner side 37e of the sprocket 37 are effectively smaller than the dimensions W and H of the chain 22 due to the presence of the chain guard 39 (i.e. smaller than if the chain guard 39 were omitted). Thus, even if the chain 22 should fall off to the inside of the sprocket 37, the chain 22 will not become lodged in the gaps L1 and L2.

When the crankset 24 configured in this manner is mounted to the crank spindle 25, as shown in Figures 5 and 6, the chain guard 39 is preferably mounted to the inner side 37e of the sprocket 37 before the sprocket 37 is mounted to the crank component 38. At this point, the two latching protrusions 51a that are close together are inserted toward the outer side 37f of the attachment elements 37b from between adjacent attachment elements 37b of the gear component 37a of the sprocket 37. As shown in Figure 4, this insertion is done between two of the attachment elements 37b (such as the upper attachment elements in Figure 5) so that the latching protrusions 51 a will be hidden behind the right crank arm 42. Because the latching protrusions 51 a are hidden by the right crank arm 42, mounting the chain guard 39 does not mar the appearance when viewed from the outside. The entire chain guard 39 is moved upward (in Figure 5) to allow the lower latching protrusions 51a that are close together to be inserted from between the opposite attachment elements 37b. Then, the two lower latching protrusions 51a are similarly inserted toward the outer side 37f, and the chain guard 39 is disposed concentrically with the sprocket 37. Once the mounting of the chain guard 39 is complete, the sprocket 37 is fastened to the second sprocket fixing sections 40b with the attachment bolts 46. After the attachment bolts 46 are installed, part of the periphery of each of the heads 46a of the attachment bolts 46 is surrounded by the bolt guards 50a of the ring component 50. The sprockets 35 and 36 are fastened to the first sprocket fixing sections 40a with the attachment fasteners (bolts/nuts) 45. Preferably, the sprockets 35 and 36 can be attached before or after the sprocket 37. The phases of the sprockets 35 to 37 are suitably aligned at this point.

Once the mounting of the sprockets 35 to 37 is complete, the crankset 24 is fixed to the crank spindle 25 with one of the fixing bolts 34. This concludes the mounting of the crankset 24. Finally, the left crank arm 26 is fixedly attached to the crankset 24 with one of the fixing bolts 34 to conclude the assembly of the crank assembly 21. Of course, it will be apparent to those skilled in the bicycle art from this disclosure that the left crank arm 26 can be attached prior to the right side if needed and/or desired.

When the operating device (shift lever) is used to downshift the chain 22 from the sprocket 35 or 36 to the sprocket 37 by means of the front derailleur 19f during the riding of the bicycle constructed as above, the chain 22 may sometimes go over (move laterally inwardly beyond) the sprocket 37 and fall off the sprocket 37 to the hanger component 20 side. However, since the chain guard 39 is provided on the inner side 37e of the sprocket 37, the gaps L1 and L2 between the chain guard 39 and the hanger component 20 are smaller than the dimensions W and H of the chain 22. Accordingly, the chain 22 does not become lodged to the inside of the chain guard 39 in the radial direction or the axial direction. As a result, the problems of being unable to turn the crank assembly 21 and potential damage or breakage of the chain 22 that could otherwise be caused by such lodging of the chain 22 are avoided. Accordingly, the chain 22 can continue to move such that if the pedals PD are turned in this state, the chain 22 will be guided by the front derailleur 19f to engage with the sprocket 37.

### OTHER EMBODIMENTS

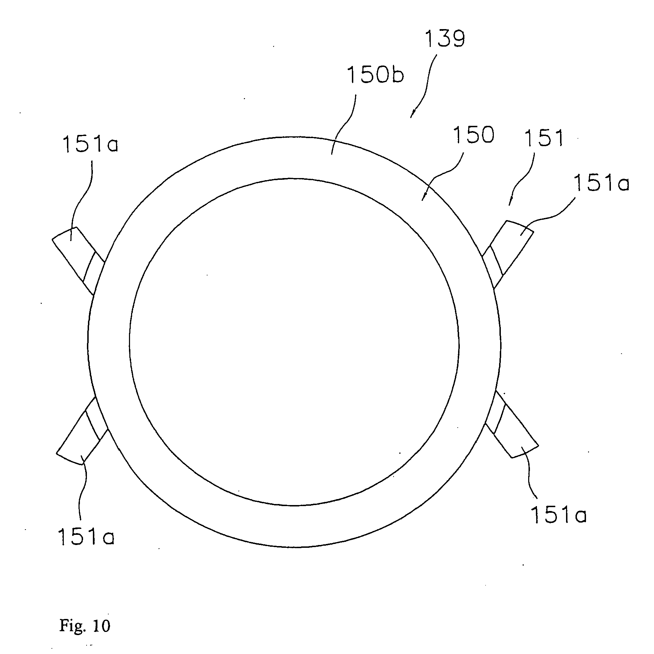

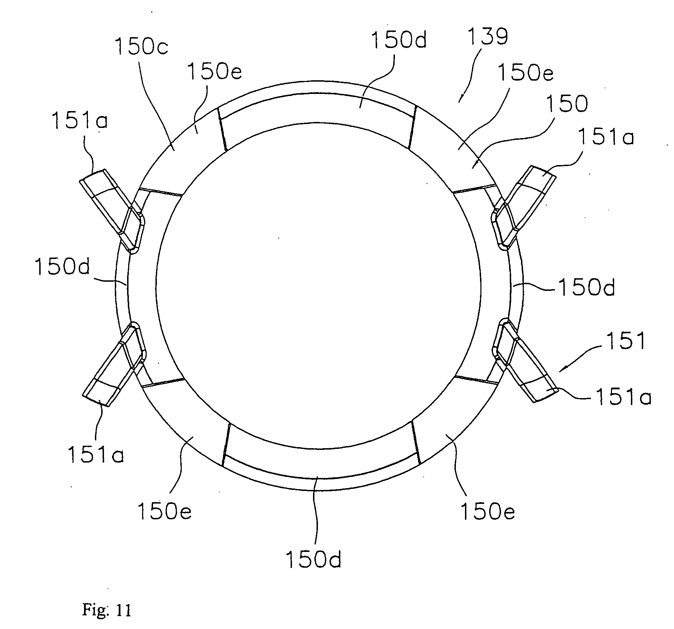

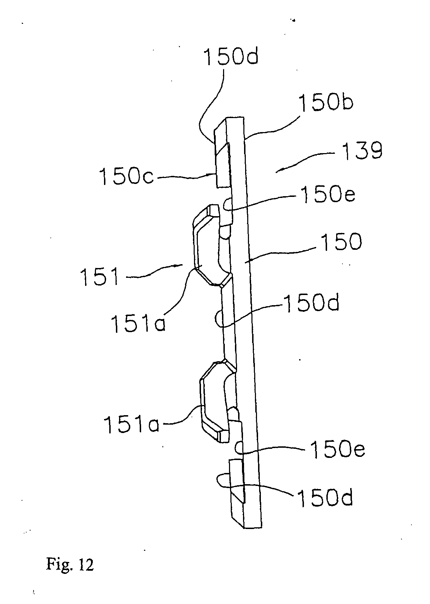

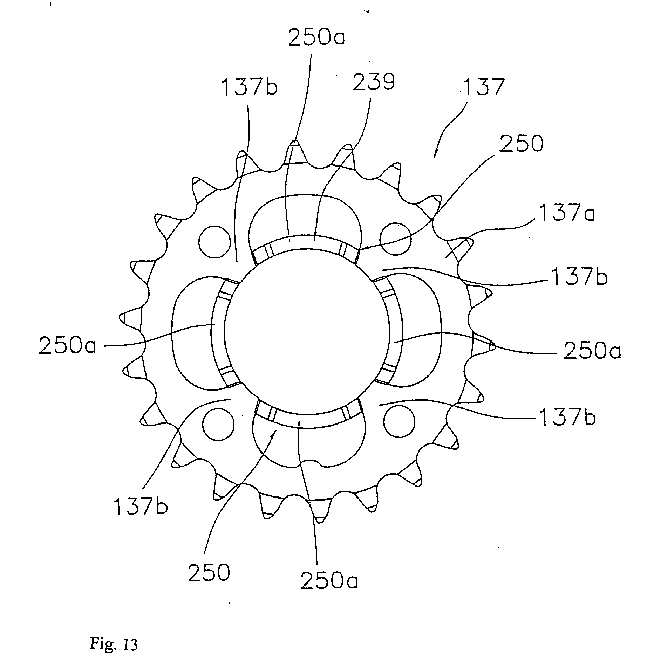

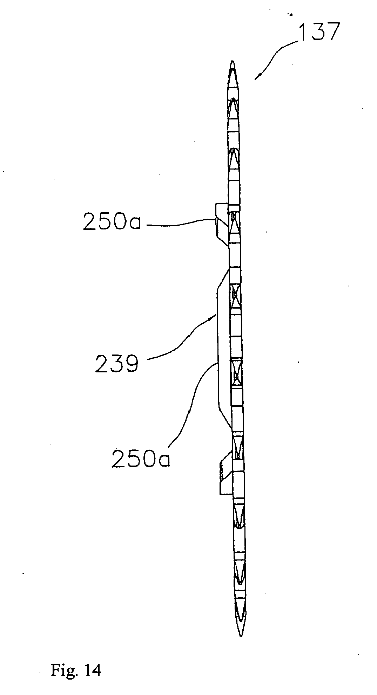

(a) With the chain guard 39 in the above embodiment, the bolt guards 50a were provided on the ring component 50. However, in this embodiment, a chain guard 139 shown in Figures 10 to 12 is provided, on which no bolt guards are formed on a ring component 150 of the chain guard 139. As shown in Figures 10 and 12, the inner side 150b of the ring component 150 is formed to be flat so that the chain 22 will not snag, just as in the above embodiment. However, as shown in Figures 11 and 12, the outer side 150c of the ring component 150 is provided with thick portions 150d disposed on (i.e. projecting from) the ring component 150 configured and arranged to be received between the attachment elements 37b of the sprocket 37, and thin portions 150e that are in contact with the attachment elements 37b of the sprocket 37. As a result, the chain guard 139 can be made more rigid, and the chain guard 139 can be kept from spinning by the step shapes created between the thick portions 150d and the thin portions 150e. As described herein, the chain guard 139 is substantially identical to the chain guard 39 of the previous embodiment. Accordingly, the descriptions and illustrations of the previous embodiment also apply to this embodiment, except as explained and illustrated herein. Moreover, it will be apparent to those skilled in the bicycle art from this disclosure that the chain guard 139 of this embodiment is designed to be used in the crank assembly 21 of the previous embodiment in place of the chain guard 39 to form a modified crank assembly with a modified crank set.
(b) In the previous embodiment, the chain guards 39 and 139 were separate members from the sprocket 37. However, a chain guard can be provided instead that is integrally formed with the sprocket 37. In Figures 13 and 14, a chain guard 239 is formed integrally with a sprocket 137 (is formed of metal with the sprocket 137). The sprocket 137 has a gear component 137a and attachment elements (components) 137b just as in the above embodiments. The chain guard 239 has a ring component 250 having four (for example) arc sections (components) 250a that protrude toward the hanger component 20 between the attachment elements 137b. Naturally, the gaps between the chain guard 239 and the hanger component 20 are set to be the same as in the above embodiments. The gaps between adjacent arc components 250a are smaller than the pitch of the chain 22 (12.7 millimeters, for instance) such that the chain can not slide therebetween. In other words, the ring component 250 includes a plurality of notched sections between the arc sections 250a where a peripheral edge of the ring component 250 is recessed in a direction away from the hanger component, and the circumferential length of each notched section is smaller than the pitch of the chain. This embodiment is substantially identical to the previous embodiments.
   Accordingly, the descriptions and illustrations of the previous embodiments also apply to this embodiment, except as explained and illustrated herein. Moreover, it will be apparent to those skilled in the bicycle art from this disclosure that the chain guard 239 and sprocket 137 of this embodiment are designed to be used in the crank assembly 21 of the previous embodiments in place of the chain guard 39 or 139 and the sprocket 37 to form a modified crank assembly with a modified crank set.
(c) In the above embodiments, the chain guards may have notched components where part of the peripheral edge is cut out, although the chain guard is still linked in the form of a ring. Thus, the ring components 50 and/or 150 may include a plurality of notched sections where a peripheral edge of the ring component 50 and/or 150 is recessed in a direction away from the hanger component, and the circumferential length of each notched section is smaller than the pitch of the chain. In other words, the ring component 50 and/or 150 may have a configuration identical to or very similar to that disclosed in embodiment (b). Here again, the notched components are preferably spaced at a distance of less than the pitch of the chain 22 like embodiment (b). In other words, the ring component 50 and/or 150 may have a configuration identical to or very similar to that disclosed in embodiment (b). Of course, it will be apparent to those skilled in the bicycle art from this disclosure that additional minor modifications may need to be made to the chain guard 39 and/or 139 if such notched sections (components are provided).
(d) A crankset having three sprockets was used as an example in the above embodiments of the present invention, but there may only be two sprockets instead.
(e) The crank component 38 had four arm portions or components 40 in the above embodiments, but the number of arm components is not limited to four, and may be three, five, or another plural number.

As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle crankset (24) comprising:
a crank component (38) configured to be coupled to a crank spindle (25) rotatably mounted in a hanger component (20) of a bicycle to rotate about a rotation axis (X), the crank component (38) including a plurality of arm portions (40) extending radially outwardly therefrom;
an innermost sprocket (37) having a predetermined number of inner sprocket teeth, the innermost sprocket being fixedly attached to the arm portions (40) of the crank component (3 8);
at least one outer sprocket (35, 36) having a predetermined number of outer teeth larger than the predetermined number of inner teeth, the outer sprocket (35, 36) being fixedly attached to the arm portions (40) of the crank component (38) to be located axially further from the hanger component (20) than the innermost sprocket (37); and
a substantially ring-shaped chain guard (39, 139, 239) disposed on an axially inner side of the innermost sprocket (37) toward the hanger component (20) such that a gap (L1, L2) between the hanger component (20) and the chain guard (39, 139, 239) is smaller than a transverse dimension of the chain (22).

2. The bicycle crankset (24) according to claim 1, wherein
the innermost sprocket (37) includes a ring-shaped gear component (37a) with the inner sprocket teeth arranged around an outer periphery thereof and a plurality of attachment elements (37b) protruding radially inwardly from an inner periphery of the gear component (37a) that are fixedly attached to the plurality of arm portions (40).

3. The bicycle crankset (24) according to claim 2, wherein
the chain guard (39, 139, 239) includes a ring component (50, 150, 250) disposed on the axially inner side of the innermost sprocket (37) such that the gap (L1, L2) is formed between the hanger component (20) and the ring component (50, 150, 250), and a mounting portion (51, 151) that is removably attached to the innermost sprocket (37).

4. The bicycle crankset (24) according to claim 3, wherein
the mounting portion (51, 151) includes a plurality of latching protrusions (51a) that extend axially outwardly from the inner side of the gear component (37a) of the innermost sprocket (37) toward an outer side of the gear component (37a) of the innermost sprocket (37), and the latching protrusions (51a) are elastically coupled to the outer side.

5. The bicycle crankset (24) according to claim 4, wherein
the latching protrusions (51a) are circumferentially arranged such that at least one of the latching protrusions (51a) is located adjacent a corresponding one of the attachment elements (37b).

6. The bicycle crankset (24) according to claim 2, wherein
the chain guard (39, 139, 239) includes a ring component (50, 150, 250) that is integrally formed with the attachment elements (37b) of the innermost sprocket (37), the ring component (50, 150, 250) protruding toward the hanger component (20) from the innermost sprocket (37).

7. The bicycle crankset (24) according to claim 6, wherein
the ring component (50, 150, 250) protrudes axially toward the hanger component (20) in areas located circumferentially between the attachment elements (37b).

8. The bicycle crankset (24) according to claim 7, wherein
the ring component (50, 150, 250) includes a plurality of arc-shaped sections (250a) protruding axially toward the hanger component (20) that are aligned in the circumferential direction and circumferentially spaced by apart from each other by a distance less than the pitch of the chain (22).

9. The bicycle crankset (24) according to claim 7, wherein
the ring component (50, 150, 250) includes a plurality of notched sections where a peripheral edge of the ring component (50, 150, 250) is recessed in a direction away from the hanger component (20), and the circumferential length of each notched section is smaller than the pitch of the chain (22).

10. The bicycle crankset (24) according to claim 6, wherein
the ring component (50, 150, 250) includes a plurality of notched sections where a peripheral edge of the ring component (50, 150, 250) is recessed in a direction away from the hanger component (20), and the circumferential length of each notched section is smaller than the pitch of the chain (22).

11. The bicycle crankset (24) according to claim 3, wherein
the ring component (50, 150, 250) is disposed on the inner side of the attachment elements (37b).

12. The bicycle crankset (24) according to claim 5, wherein
the ring component (50, 150, 250) is disposed on the inner side of the attachment elements (37b).

13. The bicycle crankset (24) according to claim 5, wherein
the crank component (38) includes four arm portions (40) and the innermost sprocket (37) includes four attachment elements (37b) fixedly attached to the arm portions (40) with four fasteners.

14. The bicycle crankset (24) according to claim 13, wherein
the mounting portion (51, 151) of the chain guard (39, 139, 239) includes four latching protrusions (51a), with an adjacent pair of latching protrusions (51a) circumferentially arranged between an adjacent pair of arm portions (40).

15. The bicycle crankset (24) according to claim 14, wherein
the mounting portion (51,151) of the chain guard (39, 139, 239) includes four latching protrusions (51 a), with a first pair of the latching protrusions (51a) circumferentially spaced less than about ninety degrees from each other and a second pair of the latching protrusions (51a) circumferentially spaced less than about ninety degrees from each other.

16. The bicycle crankset (24) according to claim 15, wherein
the first pair of latching protrusions (51a) are circumferentially spaced more than about ninety degrees from the second pair of latching protrusions (51 a).

17. The bicycle crankset (24) according to claim 5, wherein
the chain guard (39, 139, 239) is constructed of a synthetic resin material.

18. The bicycle crankset (24) according to claim 3, wherein
the chain guard (39, 139, 239) is constructed of a material with a lower coefficient of friction than the innermost sprocket (37).

19. The bicycle crankset (24) according to claim 3, wherein
the chain guard (39, 139, 239) is constructed of a synthetic resin material.

20. The bicycle crankset (24) according to claim 3, wherein
the chain guard (39, 139, 239) is constructed of a material with a lower weight than the innermost sprocket (37).
